(19) Europäisches Patentamt
European Patent Office
Office européen des brevets

(11) Numéro de publication: 0 051 030
B1

(12) FASCICULE DE BREVET EUROPEEN

(45) Date de publication du fascicule du brevet: 10.04.85

(51) Int. Cl.⁴: **B 01 F 17/16**, C 08 L 95/00

(21) Numéro de dépôt: 81401673.9

(22) Date de dépôt: 23.10.81

# (54) Préparation d'émulsions de liants hydrocarbonés par utilisation d'émulsifiants à base de diamines grasses oxyalkylées spécifiques.

(30) Priorité: 27.10.80 FR 8022932

(43) Date de publication de la demande: 05.05.82 Bulletin 82/18

(45) Mention de la délivrance du brevet: 10.04.85 Bulletin 85/15

(84) Etats contractants désignés: AT BE CH DE FR GB IT LI LU NL SE

(56) Documents cités:
FR - A - 1 199 646
US - A - 2 930 761
US - A - 3 518 101
US - A - 3 975 295
US - A - 4 007 127

(73) Titulaire: CECA S.A., 11 avenue Morane Saulnier, F-78141 Velizy Villacoublay (FR)

(72) Inventeur: Haicour, Philippe, 47 avenue Trudaine, F-75009 Paris (FR)
Inventeur: Pin, Jean, 135 résidence La Forêt, F-40160 Parentis (FR)

(74) Mandataire: Combe, André et al, CABINET BEAU DE LOMENIE 55 rue d'Amsterdam, F-75008 Paris (FR)

EP 0 051 030 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne des émulsifiants perfectionnés obtenus par réaction de 2 à 4 moles d'oxyde de propylène sur une diamine grasse et salification du produit obtenu par un acide tel que l'acide chlorhydrique.

Les liants hydrocarbonés (bitume ou goudrons pouvant contenir divers additifs connus) sont utilisés pour des revêtements, notamment sous forme d'émulsion.

Les agents émulsifiants que l'on peut employer pour réaliser ces émulsions sont, par exemple, les diamines grasses ayant 8 à 22 atomes de carbone ou certains dérivés de ces diamines.

Le brevet US 3 518 101 décrit des émulsions cationiques d'asphaltes qui contiennent en tant qu'agent émulsifiant un sel d'un composé de formule:

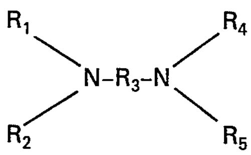 (1)

dans laquelle $R_1$ est un radical alkyle contenant d'environ 12 à environ 22 atomes de carbone, $R_2$, $R_4$ et $R_5$ sont choisis parmi l'hydrogène, un radical alkyle contenant de 1 à 4 atomes de carbone, un radical alkoxy contenant de 1 à 4 atomes de carbone et un radical polyalkoxy d'un oxyde d'alkylène contenant moins de 4 atomes de carbone, et $R_3$ est un radical alkylène contenant de 1 à 4 atomes de carbone, avec un acide polybasique tel que, de préférence, l'acide oxalique, l'acide tartique et l'acide citrique.

Dans la partie descriptive de ce brevet, on décrit la possibilité d'utiliser comme produit (1) soit des monoamines, soit des polyamines (diamines), soit des ammoniums quaternaires, soit des amines éthoxylées.

On connaissait, avant le dépôt du brevet US 3 518 101, les propriétés émulsifiantes des sels de diamines. On doit donc admettre que ledit brevet enseigne, d'une part, que les diamines comportant au moins un radical polyalkoxy sont équivalentes aux diamines de départ et, d'autre part, que les sels de ces diamines ou de ces diamines alkoxylées doivent être de préférence des sels avec des acides polybasiques.

Or, on sait par ailleurs que les polyamines de formule (1), telles que celles mentionnées dans la partie descriptive du brevet US 3 518 101, possèdent un point de fusion relativement élevé et se présentent, à température ambiante (20°C), sous forme d'un produit pâteux. On sait également que lesdites diamines éthoxylées peuvent conserver leurs propriétés émulsifiantes (sous forme de sels) à condition que l'on condense au plus 2 molécules d'oxyde d'éthylène par molécule de la diamine de départ, mais alors on sait que de telles diamines éthoxylées présentent également un point de fusion relativement élevé et son, à température ambiante (20°C), sous forme pâteuse; lorsque l'on condense plus de deux molécules d'oxyde d'éthylène par molécule de diamine de départ, on constate que les produits obtenus ne peuvent plus être utilisés pour la préparation de sels possédant des propriétés émulsifiantes. Par ailleurs: - le brevet français 1 199 646 enseigne que des diamines oxyalkylées, exemplifiées par des diamines oxyéthylénées, peuvent être utilisées comme stabilisants pour des émulsions; - et le brevet US 2 930 761 décrit des diamines oxyalkylées, qui pourraient être oxyéthylées ou exypropylées bien que ces dernières ne soient pas exemplifiées, qui seraient utilisables comme émulsifiants; mais les propriétés spécifiques des diamines oxypropylées ne sont pas mentionnées et l'emploi desdites diamines pour la réalisation d'émulsions de liants hydrocarbonés n'est pas cité.

Il a été trouvé maintenant qu'en condensant de 2 à 4 molécules d'oxyde de propylène sur une diamine de formule

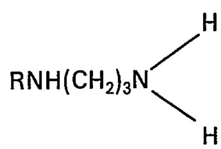 ,

il était possible d'obtenir des diamines polypropoxylées qui, d'une part, donnent naissance, sous forme de sels, à des produits émulsifiants (notamment vis-à-vis des hydrocarbures) et, d'autre part, sont liquides à température ambiante.

Les diamines grasses utilisées comme produits de départ sont des composés de formule $RNH(CH_2)_3NH_2$, dans laquelle R est un radical alkyle saturé ou insaturé contenant de 8 à 22 atomes de carbone. On peut utiliser comme produit de départ soit une diamine de formule donnée (par exemple la diamine où R est $C_{14}H_{29}$), soit un mélange de plusieurs diamines (par exemple les diamines grasses issues du suif).

La condensation, sur lesdites diamines grasses, de 2, 3 ou 4 moles d'oxyde de propylène par mole de diamine peut donner naissance à divers produits (mélanges) du fait des diverses possibilités de réaction du chaque molécule d'oxyde de propylène. En effet, la première molécule d'oxyde de propylène peut réagir soit sur l'hydrogène de l'amine NH, soit sur l'hydrogène de l'amine $NH_2$; puis les autres molécules d'oxyde de propylène peuvent réagir soit sur un hydrogène encore libre de l'une des deux fonctions amines, soit sur l'hydrogène du radical OH de

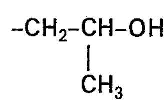

provenant de la fixation, sur la diamine de départ, de la première molécule d'oxyde de propylène.

Les diamines grasses oxypropylées utilisables pour la préparation, par salification, des émulsifiants sont donc des produits de formule:

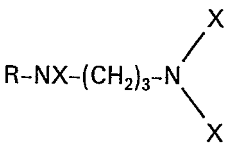

dans laquelle X est choisi parmi H et

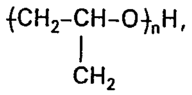

n étant égal à 1, 2, 3 ou 4, étant entendu que lesdites diamines exypropylées ne comportent que 2, 3 ou 4 radicaux

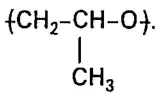

Il a été surprenant de constater que toutes ces diamines grasses oxypropylées, qu'elle soient des produits chimiques purs ou des mélanges, présentent la propriété intéressante d'avoir une température de fusion nettement plus faible que celle des diamines grasses utilisables comme produits de départ, et qu'elles donnent naissance sous forme de sels avec un acide, tel que l'acide chlorhydrique, à des émulisifants valables.

On donne ci-après les températures de fusion d'une diamine de suif utilisable comme produit de départ et d'un mélange de la diamine correspondant suivant l'invention.

| R | Produits | Température de fusion |
|---|---|---|
| 18 | N-suif propylènediamine | 35°C |
| | N-suif propylènediamine dioxypropylée | + 8°C |

Ces diamines, selon l'invention, pourront donc être stockées à température ambiante à l'état liquide.

Pour réaliser les agents tensioactifs utilisables avec les liants hydrocarbonés, on fait un savon émulsifiant par réaction de la diamine (ou d'un mélange de ces diamines) avec un acide, la réaction étant effectuée en milieu aqueux. Comme acide, on peut utiliser par exemple l'acide acétique ou l'acide chlorhydrique, ce dernier étant l'acide préféré.

Avec les diamines traditionnelles, il convient, pour réaliser cette réaction, de fondre au préalable la diamine et de la disperser dans l'eau chaude avant d'ajouter l'acide.

Avec les amines oxypropylées selon l'invention, il sera toujours possible de disperser directement la diamine dans l'eau, à température ambiante, et de réaliser la réaction avec l'acide chlorhydrique sans chauffage.

Les agents tensioactifs ainsi réalisés sont utilisables avec les liants hydrocarbonés, notamment les bitumes, comme ceux obtenus à partir d'amines non oxypropylées. On donne ci-après un exemple d'une telle utilisation avec les bitumes.

A titre comparatif, on a rassemblé dans les tableaux I et II ci-après les propriétés essentielles de produits émulsifiants de formule:

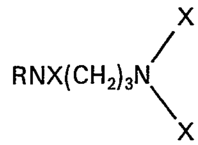

dans laquelle R est un radical suif et X est soit un radical provenant de la condensation de 1, 2, 3 ou 4 moles d'oxyde d'éthylène, d'une part, soit un radical provenant de la condensation de 1, 2, 3 ou 4 moles d'oxyde de propylène.

Dans ces tableaux, on a indiqué:
aspect du produit à 20°C,
le point d'écoulement du produit (°C),
les propriétés d'une émulsion comportant 600 parties en poids de bitume 180/210, 2 parties en poids d'émulsifiant, HCl pour pH 2 et de l'eau jusqu'à 1000 parties au total.

Ces propriétés émulsifiantes ont été mesurées par:
‰ de retenue de l'émulsion au tamis de 0,63 mm,
% de décantation de l'émulsion à 7 jours.

La retenue de l'émulsion indique la tendance à la rupture de l'émulsion testée, le % de décantation est une appréciation de la stabilité de l'émulsion.

Exemple

On a réalisé des émulsions cationiques d'un bitume routier de qualité courante à l'aide d'un turbomalaxeur dans les conditions classiques de température (bitume à 140°C, phase aqueuse à 55°C): le turbomalaxeur étant alimenté d'une part avec le bitume, d'autre part avec de l'eau contenant le chlorhydrate de la diamine obtenu par addition dans l'eau de ladite diamine et d'une quantité adéquate d'acide chlorhydrique.

Les résultats sont donnés dans le tableau III ci-après.

Dans ce tableau, sont comparés les résultats obtenus avec, d'une part, un agent émulsifiant formé de N-suif propylène-diamine chlorhydrate (mélange de N-suif propylènediamine et d'acide chlorhydrique) et, d'autre part, un agent émulsifiant formé de N-suif propylènediamine dioxypropylée chlorhydrate (mélange de N-suif propylènediamine dioxypropylée et d'acide chlorhydrique).

Le temps de rupture se mesure en procédant, à la température ambiante, à l'enrobage de gravillons et on apprécie la formation d'un film continu de bitume en prélevant à intervalles réguliers un gravillon enrobé et en le soumettant au jet d'eau d'une pissette; le temps de rupture est le délai après lequel le film de bitume n'est plus déplacé par le jet d'eau.

L'adhésivité se mesure en immergeant, dans des conditions déterminées de durée et de température (100°C), des gravillons enrobés du liant

et en observant la variation de pourcentage de surface recouverte par le liant.

Les émulsions A correspondent à des émulsions d'enrobage. Les émulsions B correspondent à des émulsions de répandage pour la réalisation d'enduits superficiels.

Ainsi que le montre le tableau, il n'existe aucune différence significative entre les propriétés des émulsions réalisées avec la N-suif propylènediamine (I) et la N-suif propylènediamine dioxypropylée (II).

Mais la N-suif propylènediamine (II) dioxypropylée a un point de fusion de 8°C, alors que la N-suif propylènediamine (I) a un point de fusion de 35°C.

Les mélanges à base de diamines propoxylées selon l'invention peuvent être utilisés à l'état brut ou être mélangés à des amines alkoxylées liquides en vue de diminuer leur point de fusion ou être dissous dans des solvants convenanbles.

Tableau I
(Condensation avec oxyde d'éthylène)

| Caractéristique émulsionnant | Diamine suif de départ | +1 mole d'oxyde d'éthylène | +2 moles d'oxyde d'éthylène | +3 moles d'oxyde d'éthylène | +4 moles d'oxyde d'éthylène |
|---|---|---|---|---|---|
| Aspect à 20°C | pâte dure | pâte molle | gel | liquide visqueux avec concret | liquide visqueux |
| Point d'écoulement (°C) | 40°C | 35°C | 30°C | 25°C | 20°C |
| Caractéristique émulsion | | | | | |
| ‰ retenue au tamis de 0,63 mm | 0 | filament | 0,6 | 0,7 | 1,6 |
| % de décantation à 7 jours | 2 | 4,4 | 5 | 10 | 10 |

Tableau II
(Condensation avec oxyde de propylène)

| Caractéristique émulsionnant | amine suif de départ | +1 mole d'oxyde de propylène | +2 moles d'oxyde de propylène | +3 moles d'oxyde de propylène | +4 moles d'oxyde de propylène |
|---|---|---|---|---|---|
| Aspect à 20°C | pâte dure | pâte molle | liquide | liquide | liquide |
| Point d'écoulement (°C) | 40°C | 20°C | 8°C | 0°C | <0°C |
| Caractéristique émulsion | | | | | |
| ‰ retenue au tamis de 0,63 mm | 0 | 0 | 0 | 0,1 | 0,2 |
| % de décantation à 7 jours | 2 | 2 | 2 | 2 | 2 |

Tableau III

| | | A | | | B | | |
|---|---|---|---|---|---|---|---|
| Caractéristiques | Emulsion | 1 | 2 | 3 | 4 | 5 | 6 |
| Formule en kg/tonne d'émulsion | Bitume 180/220 (kg) | 600 | 600 | 600 | 600 | 650 | 650 |
| | N-suif propylène diamine (I) (kg) | 2,0 | | | | 1,5 | |
| | N-suif propylène diamine dipropoxylée (II) (kg) | | 2,0 | 1,5 | 0,75 | | 1,5 |
| | HCl acide commercial à 36%-densité 1,18 (kg) | 2,3 | 2,5 | 1,97 | 1,50 | 1,50 | 1,5 |
| | Eau quantité suffisante pour (kg) | 1000 | 1000 | 1000 | 1000 | 1000 | 1000 |

Tableau III (suite)

| | | | A | | | B | | |
|---|---|---|---|---|---|---|---|---|
| Caractéristiques | | Emulsion | 1 | 2 | 3 | 4 | 5 | 6 |
| pH | Emulsifiant | | 1,8 | 1,7 | 1,9 | 2,0 | 2,0 | 2 |
| | Emulsion | | 2,2 | 2,5 | 2,1 | 2,0 | 2,0 | 1,9 |
| Viscosité de l'émulsion – centistokes à 20°C | | | 45 | 50 | 32 | 28 | 105 | 98 |
| Tamisage à 0,63 mm – ‰ de retenue (émulsion) | | | 0,1 | 0,2 | 0 | 0,1 | 0,1 | 0,2 |
| Examen à 7 jours | % décantation | | 2,8 | 2,4 | 3,0 | 4,0 | 3,0 | 2,0 |
| (émulsion) | % de sédiment | | 7,0 | 4,0 | 5,0 | 8,0 | 12,0 | 8,0 |
| | % de rupture | | 0 | 0 | 0 | 0 | 0 | 0 |
| Temps de rupture en | Gravillons siliceux | | $>1$ | $<1$ min | $<1$ min | $<1$ min | $<1$ min | $<1$ min |
| min (émulsion) | Gravillons calcaires | | $\geqslant 1$ | $<1$ min | $<1$ min | $<1$ min | $<1$ min | $<1$ min |
| Diamètre moyen en µm (particules de l'émulsion) | | | 3,5 | 3,4 | 3,5 | 7,9 | 6,5 | 4,5 |
| Désenrobage à l'eau | Silice | à froid | 100 | 100 | 100 | 100 | 100 | 100 |
| % d'adhésivité | | à chaud | 75 | 75 | 75 | 75 | 75 | 75 |
| (émulsion) | Calcaire | à froid | 100 | 100 | 100 | 100 | 100 | 100 |
| | | à chaud | 75 | 75 | 75 | 75 | 75 | 75 |
| Indice de rupture LCPC (émulsion) | | | 210 | 197 | 190 | 127 | 160 | 173 |
| | | | Emulsion d'enrobage Enrobés à froid | | | Emulsion de répandage enduits superficiels | | |

**Revendications**

1. Application d'émulsifiants spécifiques pour la préparation d'émulsions de liants hydrocarbonés avec utilisation de diamines grasses oxyalkylées caractérisée en ce que l'on utilise comme émulsifiants des diamines grasses oxyalkylées de formule:

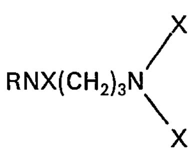 (1)

dans laquelle R est un radical alkyle saturé ou insaturé contenant de 8 à 22 atomes de carbone et X est un radical choisi parmi H et

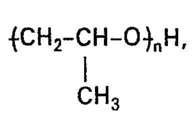

n étant égal à 1, 2, 3 ou 4, étant entendu que lesdites diamines grasses oxypropylées ne comportent que 2, 3 ou 4 radicaux

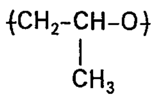

par molécule, lesdites diamines étant salifiées.

2. Application selon la revendication 1 caractérise en ce que R est un radical suif.

3. Application selon l'une des revendications 1 et 2 caractérise en ce que ladite salification est réalisée avec de l'acide.

**Patentansprüche**

1. Anwendung von spezifischen Emulgatoren zur Herstellung von Schwarzbinder-Emulsionen unter Verwendung von oxyalkylierten Fettdiaminen, dadurch gekennzeichnet, dass man als Emulgatoren oxyalkylierte Fettdiamine der Formel

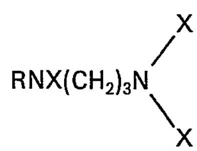 (1)

verwendet, worin R eine gesättigte oder ungesättigte Alkylgruppe mit 8 bis 22 Kohlenstoffatomen ist und X ein Radikal, ausgewählt aus H und

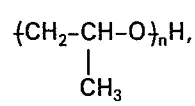

worin n 1, 2, 3 oder 4 ist, bedeutet, mit der Massgabe, dass die oxypropylierten Fettdiamine nur 2, 3 oder 4 Radikale

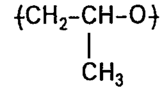

pro Molekül enthalten, welche Diamine in Salze übergeführt werden.

2. Anwendung nach Anspruch 1, dadurch gekennzeichnet, dass R eine Paraffingruppe ist.

3. Anwendung nach einem der Ansprüche 1 und 2, dadurch gekennzeichnet, dass die Salzbildung mit Säure erfolgt.

## Claims

1. Application of specific emulsifying agents for the preparation of emulsions of hydrocarbonated binding agents with the use of fatty oxy-alkylated diamines, characterized in that the fatty oxy-alkylated diamines of formula:

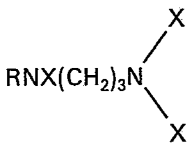

are used as emulsifying agents, in which R is a saturated or unsaturated alkyl radical containing from 8 to 22 carbon atoms and X is a radical selected from H and

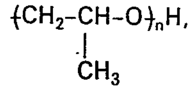

n being equal to 1, 2, 3 or 4, on the understanding that said oxypropylated fatty diamines only comprise 2, 3 or 4 radicals

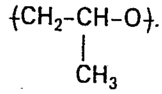

per molecule, said diamines being salified.

2. Application according to claim 1, characterized in that R ist a tallow radical.

3. Application according to any one of claims 1 and 2, characterized in that said salification is carried out with acid.